Europäisches Patentamt

European Patent Office

Office européen des brevets

(11) Veröffentlichungsnummer: **0 323 393 B1**

## EUROPÄISCHE PATENTSCHRIFT

(45) Veröffentlichungstag der Patentschrift: **05.05.93**

(51) Int. Cl.⁵: **G05D 7/01**, E03F 5/10

(21) Anmeldenummer: **88710056.8**

(22) Anmeldetag: **22.12.88**

(54) **Regelvorrichtung für den Abfluss einer flüssigkeit aus einem Behälter.**

(30) Priorität: **23.12.87 DE 3743694**

(43) Veröffentlichungstag der Anmeldung:
**05.07.89 Patentblatt 89/27**

(45) Bekanntmachung des Hinweises auf die
Patenterteilung:
**05.05.93 Patentblatt 93/18**

(84) Benannte Vertragsstaaten:
**AT BE CH DE FR GB IT LI LU NL SE**

(56) Entgegenhaltungen:
**EP-A- 0 108 378**
**WO-A-85/01974**
**DE-A- 3 418 347**
**DE-A- 3 438 536**

(73) Patentinhaber: **Steinhardt, Lothar, Dipl.-Ing.**
**Panoramastrasse 44**
**W-6204 Taunusstein 2(DE)**

Patentinhaber: **Giehl, Klaus Ulrich, Dipl.-Ing.**
**(FH)**
**Lindenstrasse 26**
**W-5239 Heimborn(DE)**

(72) Erfinder: **Steinhardt, Lothar, Dipl.-Ing.**
**Panoramastrasse 44**
**W-6204 Taunusstein 2(DE)**
Erfinder: **Giehl, Klaus Ulrich, Dipl.-Ing. (FH)**
**Lindenstrasse 26**
**W-5239 Heimborn(DE)**

(74) Vertreter: **Ouermann, Helmut, Dipl.-Ing.**
**Postfach 6145 Gustav-Freytag-Strasse 25**
**W-6200 Wiesbaden (DE)**

## Beschreibung

Die Erfindung betrifft eine Regelvorrichtung für den Abfluß einer Flüssigkeit aus einem Behälter mit einem Ablaufkanal, bestehend aus einem, um eine Drehachse schwenkbar gelagerten und den Öffnungsquerschnitt des Ablaufkanals in regelnder Weise abblendenden Drosselorgan das bewegungsschlüssig mit einem vom Flüssigkeitsdruck beaufschlagten Druckaufnehmer verbunden ist, der in Abhängigkeit vom steigenden Flüssigkeitsdruck das Drosselorgan in den Öffnungsquerschnitt des Ablaufkanals führt.

Bei einer derartigen, aus der DE – PS 33 38 793 bekannten Regelvorrichtung ist der Druckaufnehmer nur auf seiner dem Ablaufkanal zugewandten Seite durch den Flüssigkeitsdruck beaufschlagt, auf der anderen Seite hingegen durch den Atmosphärendruck. Im Fall ansteigenden Flüssigkeitsstandes im Behälter wird entsprechend dem jeweiligen Flüssigkeitsstand ein Druck von der im Ablaufkanal befindlichen Flüssigkeit auf den Druckaufnehmer ausgeübt und über diesen, den äußeren atmosphärischen Druck mehr oder weniger übersteigenden inneren Druck eine Bewegung des Druckaufnehmers in Richtung auf das der Atmosphäre zugekehrte Ende des Stellraums bewirkt. Der Bewegung des Druckaufnehmers folgt die Drosselblende, so daß bei ansteigendem Flüssigkeitsstand die Drosselblende mehr oder weniger den Abflußkanal verschließt. Dabei erfolgt die Bewegung des Druckaufnehmers je nach Flüssigkeitsstand in einem solchen Ausmaß, daß sich die einander entgegenwirkenden, einerseits von der Flüssigkeit im Behälter und andererseits von einem über ein Gegengewicht auf den Druckaufnehmer einwirkenden Kräfte ausgleichen.

Nachteilig ist bei der bekannten Regelvorrichtung deren Regelverhalten aufgrund der relativ großen Druckdifferenz zwischen dem flüssigkeitsdruckbeaufschlagten Bereich des Druckaufnehmers und dem äußeren Atmosphärendruck, ferner die für das Funktionieren der Regelvorrichtung erforderliche absolute Dichtigkeit zwischen dem vom Flüssigkeitsdruck beaufschlagten Druckraum und der Atmosphäre.

Es ist Aufgabe vorliegender Erfindung, eine Regelvorrichtung der genannten Art zu schaffen, die sich durch ein verbessertes Regelverhalten auszeichnet und bei der eine absolute Dichtigkeit des vom Flüssigkeitsdruck beaufschlagten Druckaufnehmers nicht erforderlich ist.

Gelöst wird die Aufgabe durch eine Regelvorrichtung der genannten Art, die gekennzeichnet ist durch einen zweiseitig vom Flüssigkeitsdruck beaufschlagbaren Druckaufnehmer, dessen auf der einen Druckseite gebildeter Raum unmittelbar mit dem Ablaufkanal und dessen auf der anderen Druckseite gebildeter Raum über ein Saugkanal mit dem Ablaufkanal verbunden ist.

Die Erfindung macht sich die Erkenntnis zunutze, daß sich infolge der Strömungsgeschwindigkeit der Flüssigkeit durch den Ablaufkanal in dem mit diesem verbundenen Saugkanal und damit dem saugkanalseitigen Raum ein gegenüber dem ablaufkanalseitigen Raum reduzierter Druck einstellt und diese Druckdifferenz zur Bewegung des Druckaufnehmers benutzt werden kann. So führt nach der Gleichung $h = v^2/2g$ ($h$ = Höhe der Flüssigkeitssäule, $v$ = Austrittsgeschwindigkeit der Flüssigkeit durch den Ablaufkanal) eine Erhöhung der Austrittsgeschwindigkeit der Flüssigkeit aus dem Ablaufkanal zu einer betragsmäßigen Reduzierung der Flüssigkeitssäule und damit zu einer Verringerung des Druckes $p = \gamma h$ im Saugkanal und im saugkanalseitigen Raum, so daß die Druckdifferenz zwischen den beiden Räumen zur Bewegung des Druckaufnehmers genutzt werden kann, der seinerseits das Drosselorgan bewegt.

Durch die Ausbildung der Regelvorrichtung mit den beiden erfindungsgemäß mit Flüssigkeit gefüllten Räumen, lassen sich hervorragende Regeleigenschaften verzeichnen. So erfolgt die Regelung des Abflusses der Flüssigkeit aus dem Behälter primär aufgrund der Strömungsgeschwindigkeit der Flüssigkeit im Bereich des Ablaufkanals. Eine geringe Strömungsgeschwindigkeit führt zu einer relativ geringen Abblendung der Ablauföffnung durch das Drosselorgan aufgrund des relativ geringen Unterdruckes im saugkanalseitigen Raum bezogen auf den ablaufkanalseitigen Raum, eine große Strömungsgeschwindigkeit bewirkt aufgrund des vergrößerten Unterdruckes im saugkanalseitigen Raum eine erhöhte Abblendung der Ablauföffnung. Sollte die abgeblendete Ablauföffnung durch Schmutz oder dgl. teilweise oder ganz zugesetzt werden, so führt dies zumindest zu einer Verringerung der Strömungsgeschwindigkeit im Ablaufkanal und damit zu einer Verringerung des Unterdruckes im saugkanalseitigen Raum, was bei etwa gleichbleibendem Druck im ablaufkanalseitigen Raum zu einer Bewegung des Druckaufnehmers im Sinne einer Reduzierung der Abblendung des Ablaufkanals führt. Infolge des sich vergrößernden Öffnungsquerschnittes wird der Schmutz weggeschwemmt und der Ablaufkanal damit wieder frei, die erhöhte Strömungsgeschwindigkeit im Ablaufkanal bewirkt ein Ansteigen des Unterdruckes im saugkanalseitigen Raum und damit eine erneute Schließbewegung des Drosselorgans.

Bei der erfindungsgemäßen Vorrichtung kann eine absolute Dichtigkeit zwischen den beiden Räumen gegeben sein, beispielsweise durch einen als Membran oder Doppelmembran ausgebildeten Druckaufnehmer; bei einer Ausbildung als Doppelmembran wird es als vorteilhaft angesehen, wenn sich zwischen den beiden außen flüssigkeitsbeaufschlagten Membranen ein gasförmiges Medium, insbesondere Luft befindet. Es ist aber nicht erforderlich, daß eine absolute Dichtigkeit zwischen den beiden Räumen gegeben ist, da beide mit Flüssigkeit gefüllt sind, somit sind auch andere Ausbildungen des Druckaufnehmers wie eine membranartige denkbar. Es kann im Gegenteil sogar angezeigt sein, eine Öffnung zwischen den beiden Räumen vorzusehen, sei es in Form einer separaten Öffnung oder in Form eines zwischen dem Druckaufnehmer und dem diesen umgebenden Stellraum gebildeten Spaltes. Bedingung für das einwandfreie Funktionieren der Vorrichtung ist aber, daß nur eine solche Flüssigkeitsmenge von einem Raum in den anderen übertreten kann, die kleienr ist, wie diejenige Flüssigkeitsmenge, die durch den Ablaufkanal abgeleitet werden kann.

Vorteilhaft ist der Druckaufnehmer als um eine Achse schwenkbarer Hohlkörper ausgebildet. Insbesondere die Gestaltung des Druckaufnehmers als teilweise oder ganz geschlossener Hohlkörper bewirkt beim Einstau von Flüssigkeit in den Behälter infolge des Auftriebs des Hohlkörpers ein schnelles Abblenden, der Hohlkörper besitzt damit sowohl die Funktion eines Druckaufnehmers als auch eines Schwimmerteiles. Der Hohlkörper kann eine beliebige Form aufweisen, bei einer schwenkbaren Anordnung des Hohlkörpers bietet sich jedoch eine sich über einen Kreissektor erstreckende, im wesentlichen zylindrische Gestalt an. Die dem saugkanalseitigen Raum zugewandte Seite des Hohlkörpers ist zweckmäßig so ausgebildet, daß in entleertem Zustand des Behälters keine Restflüssigkeit in diesem Bereich des Hohlkörpers zurückbleibt, da ansonsten das Auftriebsvermögen des Hohlkörpers beim erneuten Einstau reduziert wäre, mit der Folge einer langsameren Abblendung.

Eine Weiterbildung der Erfindung sieht vor, daß der Druckaufnehmer bewegungsschlüssig mit einem verstellbaren Ausgleichsgewicht oder einer Feder mit veränderbarer Federkraft verbunden ist. Das Drosselorgan sollte zweckmäßig als Drosselblende ausgebildet sein, die in Strömungsrichtung der abfließenden Flüssigkeit hinter der Ausla/föffnung angeordnet ist.

Eine spezifische Ausführungsform der Erfindung ist gekennzeichnet durch ein kastenförmiges Regelvorrichtungsgehäuse mit dem in unteren Bereich des Gehäuses befindlichen Ablaufkanal, dem diesem zugeordneten Saugkanal, einer zwischen der Oberwandung des Gehäuses und dem Ablaufkanal angeordneten Trennwand mit einer Öffnung zur Aufnahme des um die ablaufkanalseitige, horizontale Achse schwenkbaren, sich über einen Kreissektor erstreckenden, im wesentlichen zylindrischen Druckaufnehmers.

Weitere Merkmale der Erfindung sind in der Beschreibung der Figuren und in den Unteransprüchen dargestellt, wobei bemerkt wird, daß alle Einzelmerkmale und alle Kombinationen von Einzelmerkmalen erfindungswesentlich sind.

In den Figuren ist die Erfindung anhand mehrerer Ausführungsformen verdeutlicht, ohne auf diese beschränkt zu sein. Es zeigt:

Figur 1    eine Prinzipsskizze zur Verdeutlichung der Funktion der erfindungsgemäßen Regelvorrichtung,

Figur 2    eine Ansicht einer Ausführungsform der erfindungsgemäßen Regelvorrichtung, gegen die Fließrichtung gesehen,

Figur 3    einen Schnitt durch die in Figur 2 gezeigte Regelvorrichtung, parallel zur Behälterstirnwand und etwa in der Mitte durch die Regelvorrichtung geführt, gemäß der Linie D–D in Figur 4,

Figur 4    einen Schnitt durch die Regelvorrichtung gemäß der Linie A–A in Figur 3,

Figur 5    einen Schnitt gemäß der Linie B–B in Figur 3,

Figur 6    einen Schnitt gemäß der Linie C–C in Figur 3 und

Figur 7    eine Regelvorrichtung in einer Darstellung gemäß Figur 3 mit einem modifizierten Druckaufnehmer.

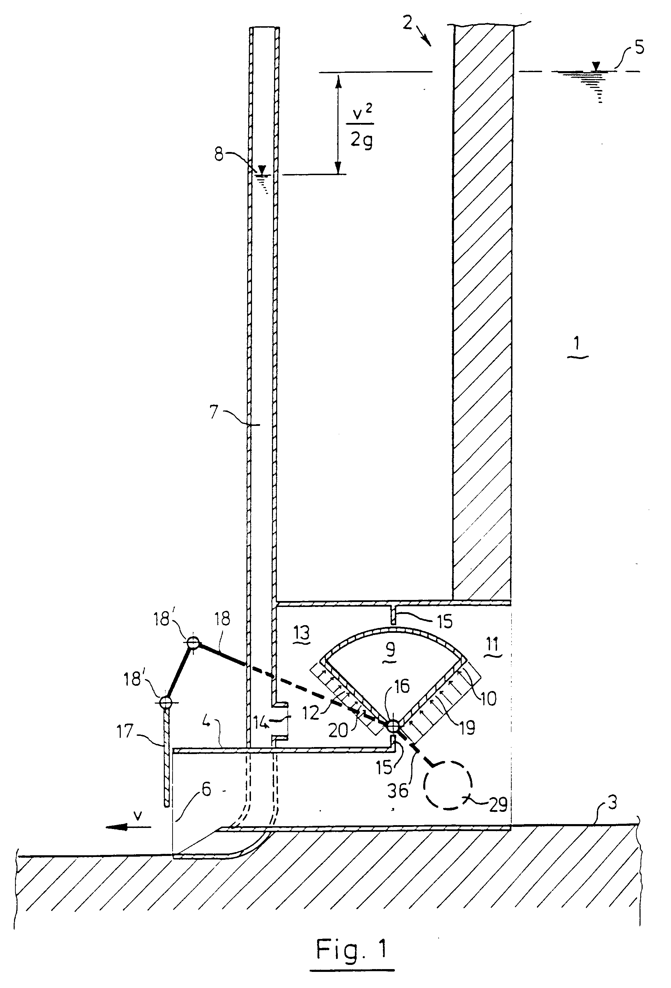

Die in Figur 1 dargestellte Prinzipsskizze zeigt einen mit Flüssigkeit, insbesondere Abwasser gefüllten Behälter 2 mit einem im Bereich des Behälterbodens 3 aus diesem mündenden Ablaufkanal 4. Die Flüssigkeit 1 ist im Behälter 2 bis zur Füllhöhe 5 aufgestaut und tritt mit der Geschwindigkeit v durch die Ablauföffnung 6 aus. Unterhalb des Ablaufkanals mündet ein Rohr 7 in, diesen, der Mündungsbereich ist dabei in Strömungsrichtung der durch den Ablaufkanal 4 austretenden Flüssigkeit geöffnet. Abgesehen von dem im wesentlichen in Strömungsrichtung orientierten Mündungsbereich des Saugrohres 7 erstreckt es sich über die Füllhöhe 5 der Flüssigkeit im Behälter 2 hinaus. Strömt die Flüssigkeit aus dem Behälter 2 mit der Geschwindigkeit v aus, so bewirkt dies im Rohr 7 eine Verminderung des Flüssigkeitsstandes auf eine Füllhöhe 8 und einen reduzierten Druck gemäß der Gleichung $p = \gamma \cdot h = \gamma \cdot v^2/2g$. Die Druckdifferenz im Behälter 2 und im Saugrohr 7 macht sich die Erfindung zunutze, indem ein Druckaufnehmer 9 vorgesehen wird, dessen eine Druckseite 10 mit einem ablaufkanalseitigen Druckraum 11 und dessen andere Druckseite 12 mit einem saugrohrseitigen Druckraum 13 verbunden ist, wobei letzterer über eine Öffnung 14 mit dem Saugrohr 7 in Verbindung steht. Der Druckaufnehmer 9 kann wie in Figur 1 beispielhaft verdeutlicht als Viertelkreiszylinder ausgebildet sein, der in einer von ihm durchsetzten Trennwand 15 um eine Achse 16 schwenkbar ist und relativ dicht an der Stirnwand 15 anliegt.

Mit dem Druckaufnehmer 9 ist bewegungsschlüssig eine Betätigungsstange 18 verbunden, die zwei Gelenke 18' aufweist und ein in die Ablauföffnung 6 ragendes Drosselorgan 17 im Bereich des einen Gelenks 18' aufnimmt. Das Drosselorgan 17 ist beidseitig in nicht näher verdeutlichten Führungen vertikal verschieblich gehalten, eine Bewegung des Druckaufnehmers entgegen dem Uhrzeigersinn führt damit zu einer verstärkten Abblendung der Ablauföffnung. Mit der Bezugsziffer 29 ist ein Ausgleichsgewicht bezeichnet, das über eine Verbindungsstange 36 gleichfalls bewegungsschlüssig mit dem Druckaufnehmer verbunden ist.

Beim Einstau von Flüssigkeit in den Behälter 2 ist der Druckaufnehmer 9 weitgehend aus dem saugrohrseitigen Druckraum 13 herausbewegt, wobei das Drosselorgan 17 den Ablaufkanal 4 weitgehend frei gibt. Mit fortschreitendem Füllen des Behälters 2 mit Flüssigkeit bewirkt der zunehmende, auf die Fläche 19 des Druckaufnehmers 9 einwirkende Flüssigkeitsdruck ein wachsendes Drehmoment entgegen dem Uhrzeigersinn, dem nur ein geringeres Gegendrehmoment aufgrund des geringeren auf die Fläche 20 wirkenden Drukkes und des Ausgleichsgerätes 29 entgegenwirkt. Dies hat zur Folge, daß der Druckaufnehmer 9 bis zum Momentenausgleich in den saugrohrseitigen Druckraum 13 hineinbewegt wird und so das Drosselorgan 17 die Ablauföffnung 6 stärker abblendet. Hieraus resultiert eine Erhöhung der Ausströmgeschwindigkeit mit einer Vergrößerung der Druckdifferenz im Saugrohr 7, bis sich zu einer vorgegegebenen max. Füllhöhe der Druckaufnehmer 9 in einem kinematischen Gleichgewicht befindet. Sollte sich vor dem Drosselorgan 17 Schmutz anstauen und damit den Ablaufkanal 4 in erhöhtem Maße zusetzen, so würde folglich die Strömungsgeschwindigkeit v im Ablaufkanal 4 sinken, eine Reduzierung der Druckdifferenz zwischen den beiden Druckräumen 11 und 13 damit einhergehen, der Druckaufnehmer 9 weiter aus dem saugrohrseitigen Druckraum 13 bewegt werden, das Drosselorgan 17 den Ablaufkanal 4 weiter frei geben, so daß der Schmutz dann durch den Ablaufkanal 4 ausgeschwemmt werden könnte, anschließend würde der zuvor beschriebene Regelvorgang erneut vonstatten gehen.

Die Darstellung der Figur 1 zur Verdeutlichung der Funktion der erfindungsgemäßen Regelvorrichtung ist bezüglich des Druckaufnehmers nicht auf dessen Ausbildung als schwenkbares Bauteil beschränkt. Der Druckaufnehmer kann vielmehr auch als die Durchtrittsöffnung zwischen den beiden Druckräumen verschließende Membran ausgebildet sein, deren druckabhängige Bewegung auf das Drosselorgan übertragen wird. Darüber hinaus kann der Druckaufnehmer beispielsweise auch als Doppelmembran ausgebildet sein, wobei eine Membran die Durchtrittsöffnung zwischen den beiden Druckräumen verschließt und mit dem Drosselorgan verbunden ist und die andere Membran die Öffnung 14 zum Saugrohr 7 verschließt. Im Druckraum 13 würde sich dann zweckmäßig Luft befinden, damit eine Regelung über die Medien flüssig – gasförmig – flüssig erfolgen kann.

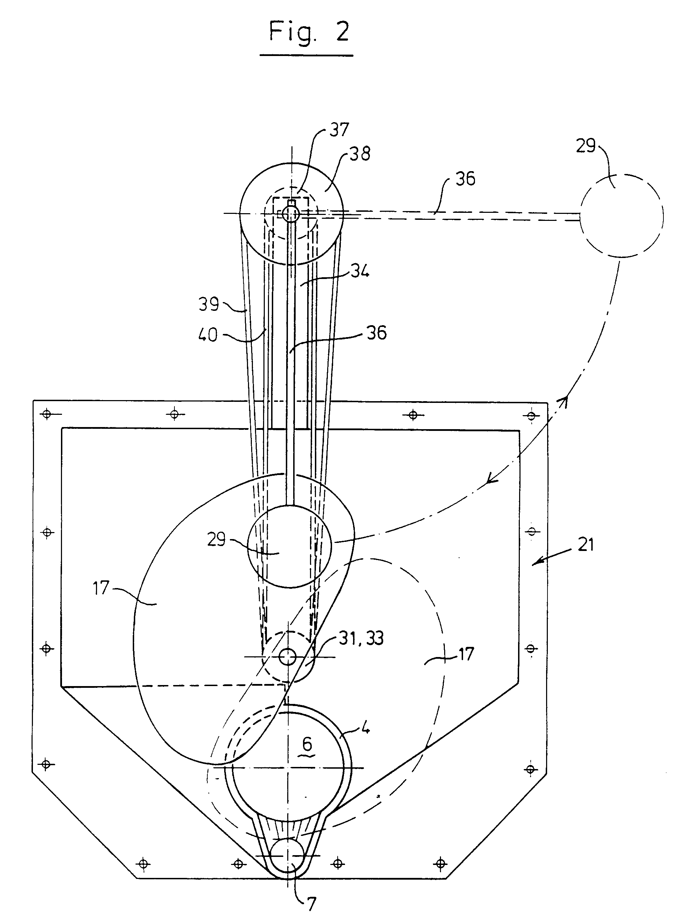

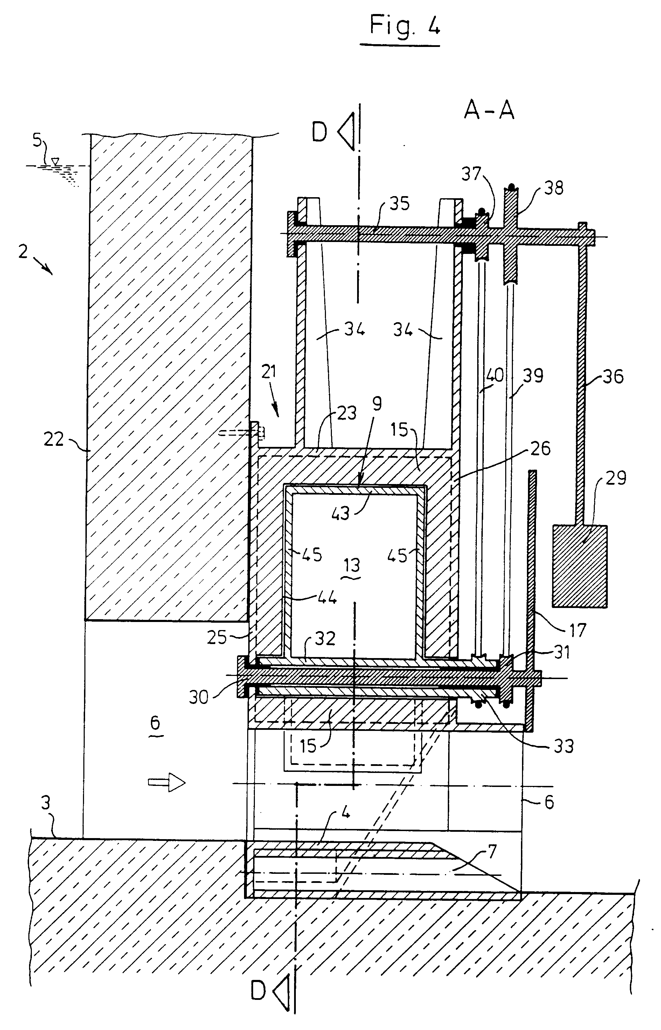

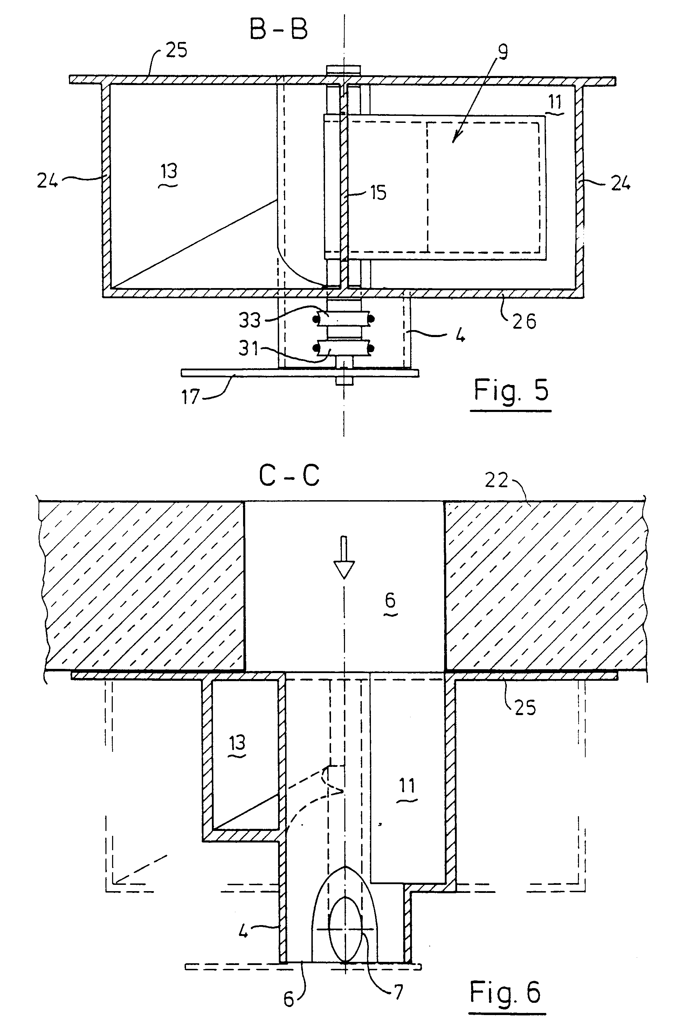

In den Figuren 2 bis 6 ist eine spezifische Ausführungsform der Erfindung dargestellt, mit der Vorrichtung der Prinzipsskizze nach Figur 1 in ihrer Funktion übereinstimmende Teile sind der Einfachheit halber nachfolgend mit gleichen Bezugsziffern bezeichnet.

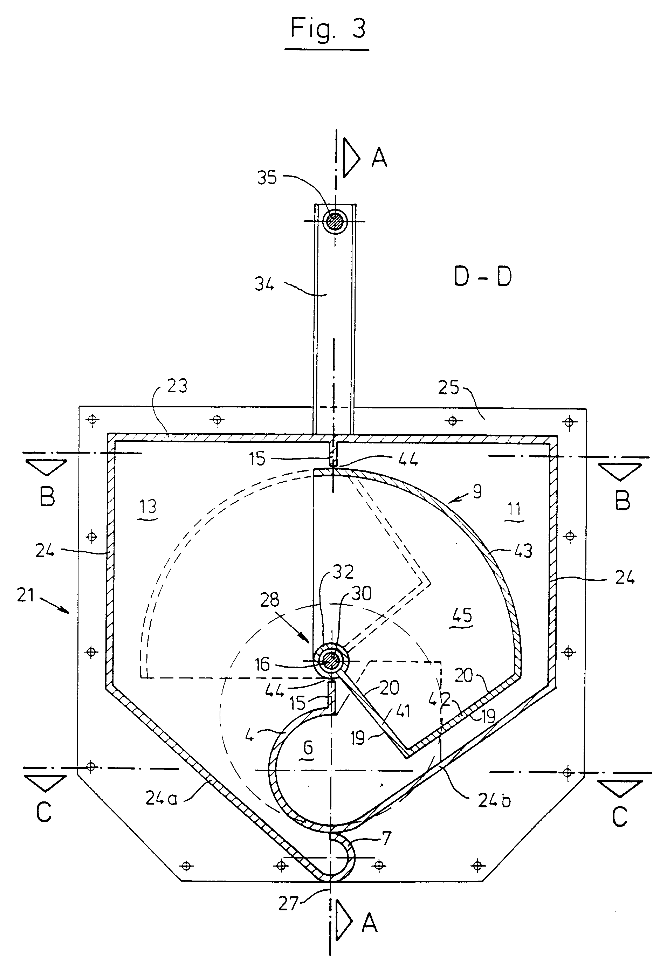

In den Figuren 2 bis 6 ist eine Regelvorrichtung gezeigt, deren kastenförmiges Gehäuse 21 oberhalb des Ablaufkanals 4 mit der Außenwandung 22 des Behälters 2 befestigt ist. Das Gehäuse 21 weist im einzelnen eine Deckwand 23, zwei Seitenwände 24, eine über die Wände 23 und 24 seitlich hervorstehende Rückwand 25 sowie eine Vorderwand 26 auf, die Seitenwände 24 laufen in ihren unteren Bereichen 24a und 24b trichterförmig aufeinander zu. Wie insbesondere der Darstellung der Figur 3 zu entnehmen ist, mündet der untere Bereich 24a der einen Seitenwand in das Saugrohr 7 und der untere Bereich 24b der anderen Seitenwand darüber in den Ablaufkanal 4. Auf der Mittelsenkrechten 27 des Gehäuses 21 bzw. der Rückwand 25 ist oberhalb des Ablaufkanales 4 eine noch näher zu beschreibende Lageranordnung 28 für den Druckaufnehmer 9, das als Drosselblende 17 ausgebildete Drosselorgan und ein Ausgleichsgewicht 29 vorgesehen.

Eine Lagerwelle durchsetzt axial festgelegt die Rückwand 25 und die Vorderwand 26 des Gehäuses 21 und nimmt an ihrem in Strömungsrichtung der Flüssigkeit gesehen hinterem Ende drehfest zunächst eine Seilscheibe 31 und dann die Drosselblende 17 auf. Die Lagerwelle 30 durchsetzt die Lagerhülse 32 des noch näher zu beschreibenden Druckaufnehmers 9, die Lagerhülse 32 nimmt benachbart zur Seilscheibe 31 eine Seilscheibe 33 drehfest auf. Das Gehäuse 21 ist mit zwei sich nach oben erstreckenden flanschförmigen Ansätzen 34 versehen, die eine axial festgelegte Lagerwelle 35 durchsetzt, welche an ihrem in Fließrichtung gesehenen hinteren Ende drehfest über eine Hebelstange 36 das Ausgleichsgewicht 29 aufnimmt, ferner drehfest oberhalb der Seilscheibe 33 eine Seilscheibe 37 gleichen Durchmessers und oberhalb der Seilscheibe 31 eine Seilscheibe 38 mit einem größeren Durchmesser als die Seil

scheibe 31. Die Seilscheibe 31 und 38 sowie 33 und 37 umschlingen Seile 39 und 40.

Der Druckaufnehmer 9 ist kreissegmentförmig ausgebildet mit einem ersten, sich radial von der Lagerhülse 32 erstreckendem Wandungsteil 41 einem senkrecht zu diesen angeordneten zweiten Wandungsteil 42 sowie einem sich an dieses anschließenden dritten Wandungsteil 43, das sich etwa über einen Viertelkreis erstreckt. Der Drukkaufnehmer 9 durchsetzt eine Trennwand 15, die in der Mittelsenkrechten 27 mit der Unterseite der Deckwand 25 und oben am Ablaufkanal 4 befestigt ist, zwischen der Trennwand 15 und der Lagerhülse 32 bzw. dem bogenförmigen Wandungsteil 43 ist ein Spalt 44 vorgesehen. Ein entsprechender Spalt 44 existiert zwischen den beiden Seitenwandungsteilen 45 des Druckaufnehmers 9 und den diesen umgebenden Gehäusewandungen.

Die Figuren 3 bis 6 zeigen die erfindungsgemäße Regelvorrichtung vor dem Einstau von Flüssigkeit in den Behälter 2. Das Ausgleichsgewicht 29 ist nach unten gerichtet und hält damit über das Seil 40 den Druckaufnehmer 9 und über das Seil 39 die Drosselblende 17 in der in den Figuren veranschaulichten Stellung, in der die Drosselblende 17 die Ablauföffnung 6 nur minimal überdeckt und der Druckaufnehmer 9 fast vollständig in den ablaufkanalseitigen Druckraum 11 verschwenkt ist. Beim Einstau von Flüssigkeit tritt diese in den Ablaufkanal 4 ein und es stellt sich entsprechend den zuvor erörterten Gegebenenheit in Abhängigkeit von der Fließgeschwindigkeit der Flüssigkeit im Ablaufkanal 4 ein bestimmtes Flüssigkeitsniveau im Saugrohr 7 und dem saugrohrseitigen Druckraum 13 ein. Bereits beim anfänglichen Einstau der Flüssigkeit wird der Druckaufnehmer 9 aufgrund der Auftriebskräfte entgegen dem Uhrzeigersinn verschwenkt, wobei bereits eine geringe Verschwenkung des Druckaufnehmers 9 infolge der Übersetzung von der Seilscheibe 38 zur Seilscheibe 31 zur einer merklichen Abblendung des Öffnungsquerschnittes des Ablaufkanales 4 führt. Als Folge hiervon ist ein erhöhter Einstau der Flüssigkeit im ablaufkanalseitigen Druckraum 11 und im saugrohrseitigen Druckraum 13 zu verzeichnen bis beide Druckräume vollständig mit Flüssigkeit gefüllt sind. Entsprechend den sich durch die Fließgeschwindigkeit im Ablaufkanal 4 ergebenden Drücken in den beiden Druckräumen 11 und 13 und dem über das Ausgleichsgewicht 29 und auch über die Drosselblende 17 eingeleiteten Momenten wird sich schließlich ein Gleichgewichtszustand des Druckaufnehmers einstellen. Ein Absinken des Flüssigkeitsniveaus im Behälter 2 wird dazu führen, daß der Druck im saugrohrseitigen Druckraum 13 relativ zu dem im ablaufkanalseitigen Druckraum 11 ansteigt und der Druckaufnehmer 9 weiter in den Druckraum 11 hineinbewegt wird, so daß aufgrund der kinematischen Verhältnisse die Drosselblende 17 von der Ablauföffnung 6 wegbewegt wird, während ein Anstieg des Flüssigkeitsniveaus zu den umgekehrten Bewegungsverhältnissen führt.

Für das Funktionieren der erfindungsgemäßen Regelvorrichtung ist es nicht erforderlich, daß die beiden Druckräume 11 und 13 gegeneinander abgedichtet sind, es kann durchaus, wie bei der beschriebenen Ausführungsform gegeben, ein Spalt 44 zwischen den Druckaufnehmers 9 und dem Gehäuse 21 vorhanden sein, durch den die Flüssigkeit vom Druckraum höheren Drucks in den niedrigeren Drucks übertreten kann, wobei jedoch gewährleistet sein muß, daß die durch den Spalt durchtretende Flüssigkeitsmenge kleiner ist als diejenige, die durch den Ablaufkanal 4 abgeleitet werden kann.

Sollte sich Schmutz vor der Drosselblende 17 anlagern, so führt dies zu einer Verminderung der Strömungsgeschwindigkeit im Ablaufkanal 4 und damit zu einer Erhöhung des Druckes im saugrohrseitigen Druckraum 13, der ein Verschwenken des Druckaufnehmers in den ablaufkanalseitigen Druckraum 11 hinein bedingt und damit die Drosselblende 17 von der Ablauföffnung 6 wegbewegt, so daß der Schmutz weggeschwemmt werden kann.

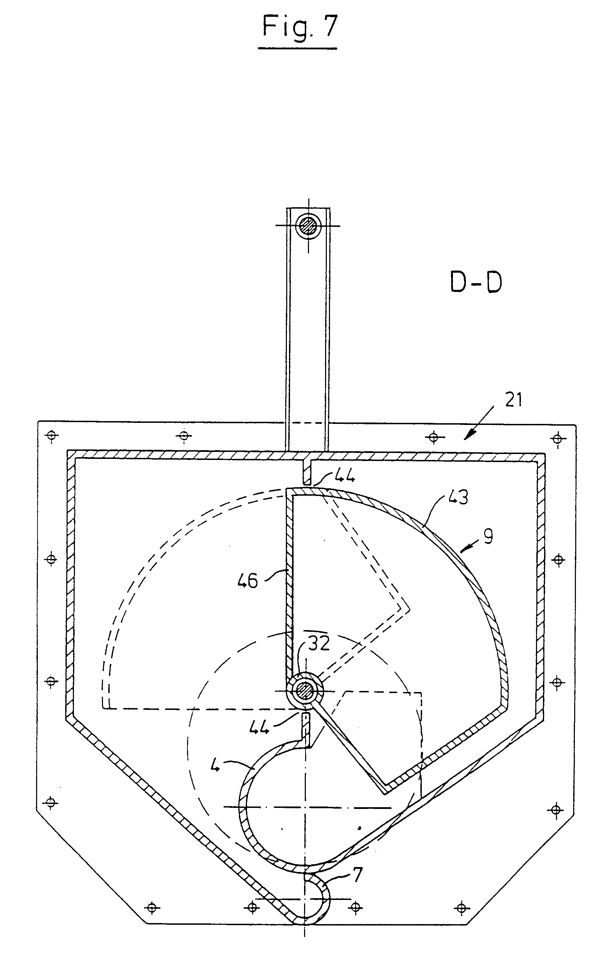

Figur 7 zeigt einen als geschlossenen Hohlkörper mit einer zusätzlichen Wandung 46 ausgebildeten Druckaufnehmer 9. Die Wandung 46 verhindert, daß Flüssigkeit sich im Druckaufnehmer 9, insbesondere wie bei der Ausführungsform nach Figur 3 in der Ecke zwischen den Wandungsteilen 41 und 42 ansammeln kann und damit das Regelverhalten der Vorrichtung beim Einstau der Flüssigkeit nachteilig beeinflußt.

In der Figur 2 ist mit gestrichelten Linien die Stellung der Drosselblende 17 und des Ausgleichsgewichtes 29 bei vollständig abgeblendeter Ablauföffnung 6 gezeigt, die Figuren 3 und 7 verdeutlichen entsprechend mit gestrichelten Linien die Position des Druckaufnehmers 9.

**Patentansprüche**

1. Regelvorrichtung für den Abfluß einer Flüssigkeit aus einem Behälter (2) mit einem Ablaufkanal (4), bestehend aus einem um eine Drehachse (18) schwenkbar gelagerten und den Öffnungsquerschnitt des Ablaufkanals in regelnder Weise abblendenden Drosselorgan (17), das bewegungsschlüssig mit einem vom Flüssigkeitsdruck beaufschlagten Durckaufnehmer (9) verbunden ist, der in Abhängigkeit vom steigenden Flüssigkeitsdruck das Drosselorgan (17) in den Öffnungsquerschnitt des Ablaufkanals (4) führt,

**gekennzeichnet** durch einen zweiseitig vom Flüssigkeitsdruck beaufschlagbaren Druckaufnehmer (9), dessen auf der einen Druckseite gebildeter Raum (11) unmittelbar mit dem Ablaufkanal (4) und dessen auf der anderen Druckseite gebildeter Raum (13) über einen Saugkanal (7) mit dem Ablaufkanal (4) verbunden ist.

2. Vorrichtung nach Anspruch 1 dadurch gekennzeichnet, daß der Druckaufnehmer (9) als um eine Achse (16) schwenkbarer Hohlkörper ausgebildet ist.

3. Vorrichtung nach Anspruch 1 oder 2, gekennzeichnet durch ein kastenförmiges Regelvorrichtungsgehäuse (21) mit dem im unteren Bereich des Gehäuses (21) befindlichen Ablaufkanal (4) dem diesem zugeordneten Saugkanal (7), einer zwischen der Oberwandung (23) des Gehäuses (21) und dem Ablaufkanal (4) angeordneten Trennwand (15) mit einer Öffnung zur Aufnahme des um die ablaufkanalseitige horizontale Achse (16) schwenkbaren, sich über einen Kreissektor erstreckenden, im wesentlichen zylindrischen Druckaufnehmers (9).

4. Vorrichtung nach einem der Ansprüche 1 bis 3, dadurch gekennzeichnet, daß die beiden Räume (11, 13) über eine Öffnung (44) miteinander in Verbindung stehen.

5. Vorrichtung nach Anspruch 3 oder 4, dadurch gekennzeichnet, daß zwischen dem Druckaufnehmer (9) und der diesen umgebenden Trennwand (15) bzw. dem Gehäuse (21) ein Spalt (44) vorhanden ist.

6. Vorrichtung nach einem der Ansprüche 1 bis 5, dadurch gekennzeichnet, daß der Druckaufnehmer (9) bewegungsschlüssig mit einem verstellbaren Ausgleichsgewicht (29) oder einer verstellbaren Feder verbunden ist.

7. Vorrichtung nach einem der Ansprüche 1 bis 6, dadurch gekennzeichnet, daß das Drosselorgan als Drosselblende (17) ausgebildet ist, die in Strömungsrichtung der abfließenden Flüssigkeit hinter der Ablauföffnung (6) angeordnet ist.

8. Vorrichtung nach Anspruch 1, 6 oder 7, dadurch gekennzeichnet, daß der Druckaufnehmer als Membran ausgebildet ist.

9. Vorrichtung nach Anspruch 1, 6 oder 7, dadurch gekennzeichnet, daß der Druckaufnehmer als Doppelmembran ausgebildet ist.

10. Vorrichtung nach Anspruch 9, dadurch gekennzeichnet, daß in dem von der Doppelmembran umschlossenen Raum ein gasförmiges Medium, insbesondere Luft angeordnet ist.

**Claims**

1. Regulating device for the flow-off of a liquid from a container (2) having a run-off channel (4), consisting of a throttle member (17) which is mounted pivotably about an axis of rotation (18) and masks the orifice cross-section of the run-off channel in a regulating manner and which is motionally connected to a pressure sensor (9) which is subjected to the liquid pressure and which guides the throttle member (17) into the orifice cross-section of the run-off channel (4) in dependence on the rising liquid pressure, characterised by a pressure sensor (9) which can be subjected to the liquid pressure on two sides and of which the space (11) formed on one pressure side is connected directly to the run-off channel (4) and of which the space (13) formed on the other pressure side is connected to the run-off channel (4) by way of a suction channel (7).

2. Device according to Claim 1, characterised in that the pressure sensor (9) is designed as a hollow body pivotable about an axis (16).

3. Device according to Claim 1 or 2, characterised by a box-shaped regulating-device housing (21) with the run-off channel (4) located in the lower region of the housing (21), with the suction channel (7) assigned to said run-off channel (4), and with a partition wall (15) arranged between the upper wall (23) of the housing (21) and the run-off channel (4) and having an orifice for receiving the essentially cylindrical pressure sensor (9) which is pivotable about the horizontal axis (16) located on the same side as the run-off channel and which extends over a sector of a circle.

4. Device according to one of Claims 1 to 3, characterised in that the two spaces (11, 13) are connected to one another by way of an orifice (44).

5. Device according to Claims 3 or 4, characterised in that a gap (44) is present between the pressure sensor (9) and the partition wall (15) or housing (21) surrounding it.

6. Device according to one of Claims 1 to 5, characterised in that the pressure sensor (9) is connected motionally to an adjustable compensating weight (29) or to an adjustable spring.

7. Device according to one of Claims 1 to 6, characterised in that the throttle member is designed as a throttle shutter (17) which is arranged behind the runoff orifice (6) in the direction of flow of the liquid flowing off.

8. Device according to Claim 1, 6 or 7, characterized in that the pressure sensor is designed as a diaphragm.

9. Device according to Claim 1, 6 or 7, characterised in that the pressure sensor is designed as a double diaphragm.

10. Device according to Claim 9, characterised in that a gaseous medium, especially air, is arranged in the space enclosed by the double diaphragm.

**Revendications**

1. Dispositif de régulation de l'écoulement d'un liquide d'un réservoir (2), comprenant un canal de décharge (4), composé d'un organe d'étranglement (17) monté pivotant autour d'un axe de rotation (18) et obturant de manière réglable la section transversale d'ouverture du canal de décharge, organe qui est engagé en liaison de mouvement avec un capteur de pression (9) sollicité par la pression du liquide, capteur qui commande l'organe d'étranglement (17) dans la section transversale d'ouverture du canal de décharge, en fonction de l'augmentation de la pression du liquide, dispositif caractérisé par un capteur de pression (9) pouvant être soumis de deux côtés à la pression du liquide, capteur dont un espace (11) formé sur un des côtés soumis à la pression est relié directement au canal de décharge (4) et dont un espace (13) formé sur l'autre côté soumis à la pression est relié par un canal d'aspiration (7) au canal de décharge (4).

2. Dispositif selon la revendication 1, caractérisé en ce que le capteur de pression (9) est réalisé en corps creux pivotant autour d'un axe (16).

3. Dispositif selon les revendications 1 ou 2, caractérisé par un boîtier du dispositif de régulation (21) en forme de coffre comportant le canal de décharge situé dans la zone inférieure du boîtier (21), le canal d'aspiration (7) associé à celui-ci, une paroi de séparation (15) disposée entre la paroi supérieure (23) du boîtier (21) et le canal de décharge (4) avec une ouverture pour loger le capteur de pression (9) essentiellement cylindrique, se développant en un secteur circulaire et pivotant autour de l'axe (16) situé du côté du canal de décharge.

4. Dispositif selon une des revendications 1 à 3, caractérisé en ce que les deux espaces (11, 13) sont en communication par une ouverture (44).

5. Dispositif selon les revendications 3 ou 4, caractérisé en ce que entre le capteur de pression (9) et la paroi de séparation (15) entourant celui-ci ou bien le boîtier (21), il existe un jeu (44).

6. Dispositif selon une des revendications 1 à 5, caractérisé en ce que le capteur de pression (9) est relié en liaison de mouvement à un contrepoids d'équilibrage (29) réglable ou à un ressort réglable.

7. Dispositif selon une des revendications 1 à 6, caractérisé en ce que l'organe d'étranglement est réalisé comme obturateur d'étranglement (17) et est placé dans le sens du courant du liquide en écoulement derrière l'ouverture de décharge (6).

8. Dispositif selon les revendications 1, 6 ou 7, caractérisé en ce que le capteur de pression est réalisé comme une membrane.

9. dispositif selon la revendication 1, 6 ou 7, caractérisé en ce que le capteur de pression est réalisé comme une double membrane.

10. Dispositif selon la revendication 9, caractérisé en ce que dans l'espace enfermé par la double membrane est disposé un milieu gazeux, en particulier de l'air.

$$\frac{v^2}{2g}$$

Fig. 1

# Fig. 2

# Fig. 3

## Fig. 4

B – B

_Fig. 5_

C – C

_Fig. 6_

# Fig. 7

D-D